# EUROPEAN PATENT SPECIFICATION

(11) **EP 3 437 917 B1**
(45) Date of publication and mention of the grant of the patent: **11.05.2022**
(21) Application number: 17792640.9
(22) Date of filing: 06.03.2017
(51) Int. Cl.: B60L 5/00, B60M 7/00, B62J 11/00, B62J 99/00, B62M 6/40, B62M 6/80, B62M 6/90, H02J 7/00, H02J 50/10, H02J 50/90, B62J 9/00

(54) **SADDLE-TYPE VEHICLE**
SATTELFAHRZEUG
VÉHICULE DU TYPE À SELLE

(30) Priority: 02.05.2016 JP 2016092359
(43) Date of publication of application: 06.02.2019
(73) Proprietor: Yamaha Hatsudoki Kabushiki Kaisha, Iwata-shi, Shizuoka 438-8501 (JP)
(72) Inventor: MIYAZAKI, Toshinori, Iwata-shi Shizuoka 438-8501 (JP); NAKAMURA, Kazuto, Iwata-shi Shizuoka 438-8501 (JP)
(74) Representative: Stöckeler, Ferdinand
(86) International application number: PCT/JP2017/008690
(87) International publication number: WO 2017/191707

(56) References cited:
- EP-A2- 2 399 817
- FR-A1- 2 997 679
- JP-A- 2001 199 379
- JP-A- 2014 150 628
- JP-A- 2015 154 648
- JP-A- 2016 021 449
- JP-A- 2016 067 189
- JP-A- 2016 067 189
- US-A- 6 150 794
- US-A- 6 150 794

## Description

### TECHNICAL FIELD

The present teaching relates to a system comprising a straddled vehicle (10) and a charging system (50) that charges a power storage device (221) included in the straddled vehicle (10).

### BACKGROUND ART

Straddled vehicles, such as bicycles, motorcycles, or the like, have been widely used as transportation apparatuses that can be easily used. In recent years, spread of straddled vehicles which include a motor that generates a driving force that is transmitted to wheels has been advanced. As such a straddled vehicle, for example, there is an electric power-assisted bicycle in which a pedal stepping force of a rider is assisted by a driving force of a motor.

The electric power-assisted bicycle includes a battery that supplies power to the motor. The battery is arranged so as to be removable. The battery is charged using a commercially available power supply source. In charging the battery, an exclusive adaptor is used.

For the electric power-assisted bicycle, in general, charging of the battery is performed at home. However, it is convenient if it is possible to charge the battery, for example, in a public parking lot or the like. In particular, if a wireless power transmission system is installed in a parking lot, it is possible to charge the battery without separately performing an operation for charging.

In Japanese Patent Application Publication No. 2012-34487, an electric power-assisted bicycle in which a battery is chargeable by non-contact power supply is described. In this patent publication, a power reception coil is arranged at a front basket included in the electric power-assisted bicycle. The power reception coil is annularly formed. The power transmission coil is arranged at a post provided in a parking lot. Using a magnetic resonance between the power reception coil and the power transmission coil, power is transmitted from the power transmission coil to the power reception coil. Power that has been transmitted is stored in the battery.

EP 2 399 817 A2 describes a clamping device for an electrical vehicle. The device has a wall or a ceiling supported at a bottom part and secured at a holder arm. The wall or the ceiling is aligned parallel and spaced to the bottom part that is vertical to a longitudinal axis of the holder arm. An inner contour of a clutch is adapted to an outer contour of a fix head. The fix head is inserted into the clutch in an interchangeable or engagable manner. Energy transmission units are cooperated in the fix head and the clutch. Electrically operated magnetic coils are formed in the clutch, by transformation of inductive electric energy.

The document JP 2016 067189 A discloses a system comprising a straddled vehicle and a charging system according to the preamble of claim 1.

### SUMMARY OF INVENTION

A straddled vehicle, such as an electric power-assisted bicycle or the like, is small, as compared to an automobile. Also, a straddled vehicle is easy to use and highly convenient. Therefore, a user of a straddled vehicle does not have to pay a close attention to a parking position of the straddled vehicle, as compared to a case in which the user drives an automobile. As a result, as for straddled vehicles, depending on a user, a parking posture of a straddled vehicle differs in some cases. Therefore, it is difficult to require a user to accurately park a straddled vehicle in a correct posture.

As described in the above-described patent publication, in a case in which a battery is charged by non-contact power supply, in order to increase efficiency of power transmission (which will be hereinafter merely referred to as "power transmission efficiency") from a power transmission coil to a power reception coil, it is important to adjust a position of the power reception coil with respect to the power transmission coil. However, as described above, if a parking posture differs for each user, a position of a power reception coil with respect to a power transmission coil might be shifted. In this case, power transmission efficiency is reduced. The present invention relates to a system comprising a straddled vehicle (10) and a charging system (50) that charges a power storage device (221) included in the a straddled vehicle (10), as recited in claim 1.

It is an object of the present teaching is to provide a system comprising a straddled vehicle and a charging system, wherein the straddled vehicle in which power transmission efficiency can be increased without strictly managing a parking posture.

According to the invention a system comprising a straddled vehicle and a charging system wherein the straddled vehicle includes a front wheel, a rear wheel, a vehicle body frame, a saddle, a power storage device, and a power reception device. The rear wheel is arranged more backward than the front wheel. The vehicle body frame supports the front wheel and the rear wheel. The saddle is supported by the vehicle body frame. The power storage device is supported by the vehicle body frame. The power reception device is supported by the vehicle body frame and is connected to the power storage device, The straddled vehicle is a straddled vehicle on which a rider rides in a state the rider straddles the saddle. The power reception device includes a solenoid power reception coil. The solenoid power reception coil is relatively-unmovably supported with respect to the vehicle body frame of the straddled vehicle. The solenoid power reception coil is located in a first plane (P1) and is wound around a first axial line that passes through a center of a first core of the solenoid power reception coil,a straight line (L1) is perpendicular to the first plane (PI), perpendicularly intersects the first axial line and passes through an intermediate point of a length of the power reception coil in an axial direction, and the charging system comprising: a power transmission coil used for transmitting power to the solenoid power reception coil, characterized in that the solenoid power reception coil is located forward relative to a head pipe of the straddled vehicle, above a lower end of the head pipe and below an upper end of the head pipe such that,in a state in which the straddled vehicle is parked and power transmission from a power transmission coil provided in a power transmission device to the solenoid power reception coil is performed,the solenoid power reception coil is located above the power transmission coil and the first axial line that extends in parallel to a second plane (P2) on which the power transmission coil is located,and the straight line (L1) perpendicularly intersects with the second plane (P2) and with a second axial line passing through a center of a second core around which the power transmission coil is wound, and passes through an intermediate point of a length of the power transmission coil in an axial direction, and the first core of the solenoid power reception coil has a thick rectangular plate shape and is formed of a magnetic material.

In the above-described vehicle, it is possible to increase power transmission efficiency without strictly managing a parking posture.

In the above-described straddled vehicle, the power transmission coil may be a circular type coil and may be a solenoid coil.

A circular type coil is a coil (a coil that is annularly wound in a plane) a winding of which is located on a plane. A solenoid coil is a coil (a coil that is wound in a cylindrical shape) which is wound around a straight line and has a length in a direction in which the straight line extends.

If the power transmission coil is a circular type coil, "the plane on which the power transmission coil is located" is a plane including the power transmission coil. In this case, a central axial line of the power transmission coil perpendicularly intersects with the plane on which the power transmission coil is located.

If the power transmission coil is a circular type coil, a form in which "the solenoid power reception coil is wound around the axial line that extends in parallel to the plane on which the power transmission coil is located" includes not only a form in which the axial line of the solenoid power reception coil is completely in parallel to the plane on which the power transmission coil is located but also a form in which the axial line of the solenoid power reception coil is not in parallel to the plane on which the power transmission coil is located in a strict sense. For example, the axial line of the solenoid power reception coil may extend in an inclined state so as to intersect with the plane on which the power transmission coil is located. In this case, an inclination angle to the plane on which the power transmission coil is located is, for example, 30 degrees or less. The inclination angle is preferably 20 degrees or less. The inclination angle is more preferably 10 degrees or less.

On the other hand, if the power transmission coil is a solenoid coil, "the plane on which the power transmission coil is located" is a plane (that is, a plane including the central axial line of the power transmission coil) on which the central axial line of the power transmission coil is located. That is, "the plane on which the power transmission coil is located" is a plane including the central axial line of the power transmission coil and includes all of planes obtained by rotating the plane with the central axial line of the power transmission coil as a center.

If the power transmission coil is a solenoid coil, a form in which "the solenoid power reception coil is wound around the axial line that extends in parallel to the plane on which the power transmission coil is located" includes not only a form in which the axial line of the solenoid power reception coil is completely in parallel to one of planes that include the central axial line of the power transmission coil but also a form in which the axial line of the solenoid power reception coil is not in parallel to one of planes that include the central axial line of the power transmission coil in a strict sense. For example, the solenoid power reception coil may extend in a state in which the axial line of the solenoid power reception coil is inclined so as to intersect with a plane including the central axial line of the power transmission coil. In this case, an inclination angle to a plane including the central axial line of the power transmission coil is, for example, 30 degrees or less. The inclination angle is preferably 20 degrees or less. The inclination angle is more preferably 10 degrees or less.

The axial line of the solenoid power reception coil extends, for example, any one of the left-right direction, the front-rear direction, and the up-down direction of the straddled vehicle. Note that the direction in which the axial line of the solenoid power reception coil extends is appropriately selected, for example, in accordance with a relationship with the power transmission device (the power transmission coil).

The axial line of the solenoid power reception coil is, for example, in a plane that is perpendicular to the left-right direction of the straddled vehicle. In this case, the axial line of the solenoid power reception coil may extend, for example, in the front-rear direction of the straddled vehicle and may extend in the up-down direction of the straddled vehicle. Note that the direction in which the axial line of the solenoid power reception coil extends is appropriately selected, for example, in accordance with the relationship with the power transmission device (the power transmission coil).

The solenoid power reception coil may be supported by the vehicle body frame of the straddled vehicle, for example, such that in a state in which the straddled vehicle is parked and power transmission from the power transmission coil to the solenoid power reception coil is performed, and the axial line of the solenoid power reception coil is in parallel to an axial line of the power transmission coil that is a solenoid coil. In this case, it is possible to increase power transmission efficiency.

The solenoid power reception coil may be supported by the vehicle body frame of the straddled vehicle, for example, such that, in a state in which the straddled vehicle is parked and power transmission from the power transmission coil to the solenoid power reception coil is performed, the axial line of the solenoid power reception coil is perpendicular to an axial line of the power transmission coil that is a circular type coil. In this case, it is possible to increase power transmission efficiency.

The solenoid power reception coil may be supported by the vehicle body frame of the straddled vehicle, for example, such that, in a state in which the straddled vehicle is parked and power transmission from the power transmission coil relatively-unmovably supported with respect to the power transmission device to the solenoid power reception coil relatively-unmovably supported with respect to the vehicle body frame of the straddled vehicle is performed. In this case, it is possible to perform, in parking the straddled vehicle, positional adjustment of the power reception coil with respect to the power transmission coil.

Note that, the above-described form may include a mechanism of performing, in parking the straddled vehicle, positional adjustment of the solenoid power reception coil with respect to the power transmission coil. The mechanism is realized, for example, by a recessed part that is formed in one of the power reception device and the power transmission device and opens in the front-rear direction of the straddled vehicle and a protruding part that is formed in the other one of the power reception device and the power transmission device and is inserted in the recessed part in the front-rear direction of the straddled vehicle.

The straddled vehicle may further include a steering member that steers the front wheel. In this case, the solenoid power reception coil may be supported by the steering member. A form in which the solenoid power reception coil is supported by the steering member is not particularly limited. Forms in which the solenoid power reception coil is supported by the steering member include not only a form in which the solenoid power reception coil is directly supported with respect to the steering member but also a form in which the solenoid power reception coil is indirectly supported with respect to the steering member.

The straddled vehicle may further include a handle and a steering shaft that supports the handle. The vehicle body frame may include a head pipe in which the steering shaft is inserted. In this case, the solenoid power reception coil may be arranged in an area defined by a first straight line, a second straight line, a third straight line, and a fourth straight line. In this case, the first straight line is in contact with a front end of a hub included in the front wheel and extends in an up-down direction of the straddled vehicle, when viewed from a side surface of the straddled vehicle. The second straight line extends in a direction that perpendicularly intersects with the first straight line and is in contact with an upper end of the handle, when viewed from the side surface of the straddled vehicle. The third straight line extends in a direction that perpendicularly intersects with the first straight line and passes through an axial center of the hub, when viewed from the side surface of the straddled vehicle. The fourth straight line extends in parallel to the head pipe and passes through the axial center of the hub, when viewed from the side surface of the straddled vehicle.

In this case, it is possible to park the straddled vehicle while adjusting a positional relationship between the power reception device (the solenoid power reception coil) and the power transmission device (the power transmission coil).

The straddled vehicle may further include a basket arranged above the front wheel. In such a form, the solenoid power reception coil may be arranged between the front wheel and the basket. In this case, it is possible to arrange the solenoid power reception coil making a good use of a space that is originally a dead space.

A form in which the saddle is supported by the vehicle body frame is not particularly limited. Forms in which the saddle is supported by the vehicle body frame include not only a form in which the saddle is directly supported with respect to the vehicle body frame but also a form in which the saddle is indirectly supported with respect to the vehicle body frame.

A form in which the power storage device is supported by the vehicle body frame is not particularly limited. Forms in which the power storage device is supported by the vehicle body frame include not only a form in which the power storage device is directly supported with respect to the vehicle body frame and but also a form in which the power storage device is indirectly supported with respect to the vehicle body frame.

A form in which the power reception device is supported by the vehicle body frame is not particularly limited. Forms in which the power reception device is supported by the vehicle body frame include not only a form in which the power reception device is directly supported with respect to the vehicle body frame and but also a form in which the power reception device is indirectly supported with respect to the vehicle body frame.

### BRIEF DESCRIPTION OF DRAWINGS

[FIG. 1] FIG. 1 is a left side view illustrating an electric power-assisted bicycle as a straddled vehicle according to an embodiment of the present teaching.
[FIG. 2] FIG. 2 is a left side view illustrating an enlarged front part of the electric power-assisted bicycle illustrated in FIG. 1.
[FIG. 3] FIG. 3 is a perspective view illustrating a power reception coil.
[FIG. 4] FIG. 4 is a left side view illustrating a state in which a battery of the electric power-assisted bicycle illustrated in FIG. 1 is being charged.
[FIG. 5] FIG. 5 is a left side view illustrating an enlarged front part of the electric power-assisted bicycle illustrated in FIG. 4.
[FIG. 6] FIG. 6 is a perspective view illustrating a power transmission coil.
[FIG. 7] FIG. 7 is a cross-sectional view illustrating a relationship between a power reception coil and a power transmission coil in a state in which a battery of an electric power-assisted bicycle is being charged.
[FIG. 8] FIG. 8 is a view illustrating a positional relationship between a power transmission coil and a power reception coil in a case in which the power transmission coil is a circular type coil.
[FIG. 9] FIG. 9 is a view illustrating that an axial line of a power reception coil extends in a left-right direction of a vehicle.
[FIG. 10] FIG. 10 is a view illustrating that an axial line of a power reception coil extends in an up-down direction of a vehicle.
[FIG. 11] FIG. 11 is a view illustrating an example in which a power reception coil an axial line of which extends in a left-right direction is arranged in front of a front basket.
[FIG. 12] FIG. 12 is a view illustrating an example in which a power reception coil an axial line of which extends in an up-down direction is arranged in front of a front basket.
[FIG. 13] FIG. 13 is a view illustrating that an axial line of a power reception coil extends in each of a front-rear direction and a left-right direction in a plane that is perpendicular to an up-down direction.

### DESCRIPTION OF EMBODIMENTS

In general, an exclusive adaptor is used in charging a battery of an electric power-assisted bicycle. Therefore, in charging the battery, for example, a special operation, such as connecting the exclusive adaptor to the battery or the like, is necessary.

If the battery is charged by non-contact power supply, the above-described special operation for charging the battery is unnecessary. However, if the battery is charged by non-contact power supply, it is important to adjust a position of a power reception coil with respect to a power transmission coil. This is because if the position of the power reception coil with respect to the power transmission coil is shifted, power transmission efficiency is reduced.

An automobile is large, as compared to a straddled vehicle. Therefore, for an automobile, a parking position is adjusted by repeating turning back many times such that the automobile is in parallel to a white line drawn in a parking lot. As a result, it is possible to park the automobile in a predetermined parking position.

In contrast, a straddled vehicle, such as an electric power-assisted bicycle or the like, is small, as compared to an automobile. Also, a straddled vehicle is easy to use and highly convenient. Therefore, a user of a straddled vehicle does not have to pay a close attention to a parking position of the straddled vehicle, as compared to a case in which the user drives an automobile. Therefore, as for straddled vehicles, there is a case in which, depending on a user, a parking posture of a straddled vehicle differs. That is, there is a risk that, if a battery included in a straddled vehicle is charged by non-contact power supply, a position of a power reception coil with respect to a power transmission coil is shifted and power transmission efficiency is reduced.

The present inventor examined requesting a user for accuracy of a parking posture of a straddled vehicle in order to increase power transmission efficiency. However, considering convenience or the like of straddled vehicles, the inventor realized that such a request was difficult. Thus, the inventor examined increasing power transmission efficiency without requesting accuracy of a parking posture.

First, the inventor examined in what parking postures straddled vehicles are parked with respect to a power supply equipment. As a result, the inventor found that, although the parking postures are different depending on the power supply equipment or the like, the parking postures of the straddled vehicles are not largely shifted in all of directions but tend to be shifted in a specific direction. Specifically, the inventor found that the parking postures are less shifted in a front direction of the vehicles or in a rear direction of the vehicles than in a left direction of the vehicles or in a right direction of the vehicles.

Next, power transmission efficiency was examined. First, a circular type coil was examined. As a result, the inventor found that, if each of a power reception coil and a power transmission coil is a circular type coil, as for directions in which a position of the power reception coil with respect to the power transmission coil is shifted, there are a direction in which power transmission efficiency tends to be reduced and a direction in which power transmission efficiency is hardly reduced. Specifically, it was found that, when the power reception coil is shifted with respect to the power transmission coil in a rotational direction (that is, a direction in which a winding of the coil is wound) around a center axial line of the coil, power transmission efficiency is hardly reduced but, when the power reception coil is shifted with respect to the power transmission coil in an axial direction or a radial direction (a direction perpendicular to the axial direction) of the coil, power transmission efficiency tends to be reduced.

The above-described characteristic does not match the parking postures of the straddled vehicles. This is because it is difficult to cause a direction in which power transmission efficiency is hardly reduced to match a direction in which the parking postures tend to be shifted.

Therefore, if, in a case in which the battery included in the straddled vehicle is charged by non-contact power supply, each of the power reception coil and the power transmission coil is a circular type coil, when the position of the power reception coil with respect to the power transmission coil is shifted, power transmission efficiency tends to be reduced.

Next, a solenoidal type coil was examined. As a result, it was found that, also if each of the power reception coil and the power transmission coil is a solenoidal type coil, as for directions in which the position of the power reception coil is shifted with respect to the power transmission coil, there are a direction in which power transmission efficiency tends to be reduced and a direction in which power transmission efficiency is hardly reduced. Specifically, (1) when the power reception coil is shifted with respect to the power transmission coil in the axial direction of the coil or (2) when the power reception coil is shifted with respect to the power transmission coil in a direction in which the power reception coil rotates around a straight line that perpendicularly intersects with each of the power reception coil and the power transmission coil, power transmission efficiency tends to be reduced. However, it was found that, as long as a shift is small in axial directions of both of the coils and a parallel relationship between both of the coils is maintained, even when one of the coils is shifted in a direction (a circumferential direction) around the axial line of the other coil, power transmission efficiency is hardly reduced.

The above-described characteristic tends to match a parking posture of a straddled vehicle. This is because it is possible to cause a direction in which power transmission efficiency is hardly reduced to match a direction in which the parking posture tends to be shifted.

Therefore, if, in a case in which a battery included in a straddled vehicle is charged by non-contact power supply, each of a power reception coil and a power transmission coil is a solenoidal type coil, even when a position of the power reception coil with respect to the power transmission coil is shifted, it is possible to suppress reduction in power transmission efficiency. As a result, it is possible to suppress reduction in power transmission efficiency without requesting a user to park the straddled vehicle in an accurate parking posture.

Also, as a result of further examinations, the inventor noticed that, with the same distance from a power transmission coil to a power reception coil, a coil size can be made smaller for a solenoidal type coil than for a circular type coil. Because the size can be made smaller, for a mounting position on a straddled vehicle, the degree of freedom is increased. Therefore, a coil can be easily arranged in accordance with an equipment that is used for parking the straddled vehicle.

Based on the above-described findings, the present teaching has been completed.

With reference to the accompanying drawings, a straddled vehicle according to an embodiment of the present teaching will be described below. In this embodiment, as a straddled vehicle, an electric power-assisted bicycle will be described as an example. In the drawings, the same or corresponding parts are denoted by the same reference symbol and the description of the parts is not repeated.

### [Electric Power-assisted Bicycle]

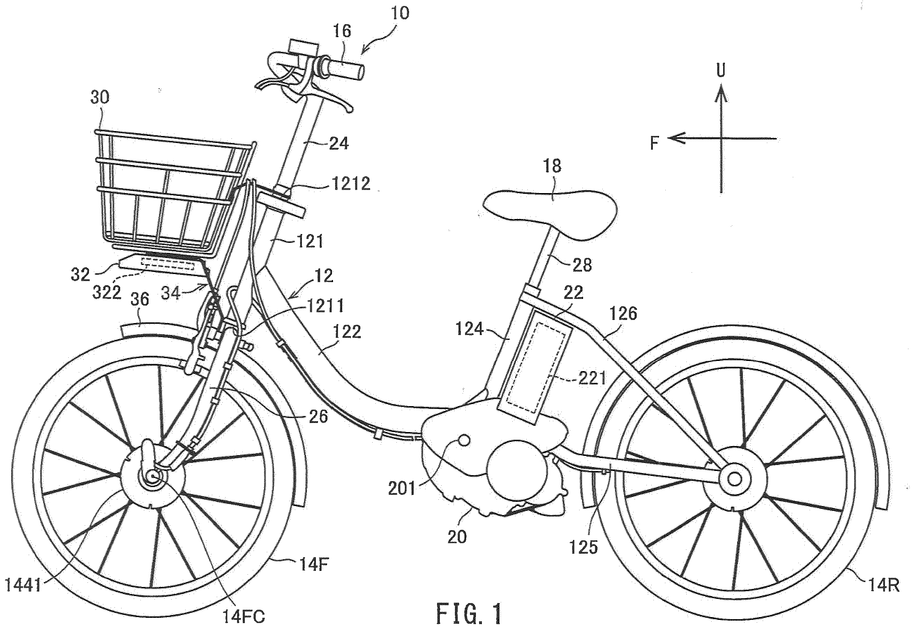

With reference to FIG. 1, an electric power-assisted bicycle 10 according to an embodiment of the present teaching will be described. FIG. 1 is a left-side view illustrating a schematic structure of the electric power-assisted bicycle 10.

In the following description, each of a front-rear direction (forward and backward), a left-right direction, and an up-down direction (above and below) means a direction viewed from a rider who sits on a saddle 18 of the electric power-assisted bicycle 10. In the drawings that are referred to in the following description, an arrow F indicates forward with respect to a vehicle, an arrow U indicates upward with respect to the vehicle, an arrow L indicates leftward with respect to the vehicle, and an arrow R indicates rightward with respect to the vehicle.

The electric power-assisted bicycle 10 includes a vehicle body frame 12, a front wheel 14F, a rear wheel 14R, a handle 16, the saddle 18, a drive unit 20, and a battery unit 22.

The vehicle body frame 12 includes a head pipe 121, a main frame 122, a seat frame 124, a pair of chain frames 125, 125, and a pair of seat frames 126, 126.

The head pipe 121 is arranged in a front part of the vehicle body frame 12 and extends in the up-down direction. A steering shaft 24 is inserted in the head pipe 121 so as to freely rotate. The handle 16 is fixed to an upper end of the steering shaft 24. A front fork 26 is fixed to a lower end of the steering shaft 24. A front fender 36 is fixed to the front fork 26. The front wheel 14F is rotatably attached to a lower end of the front fork 26. That is, the front wheel 14F is supported by the vehicle body frame 12 via the steering shaft 24 and the front fork 26. The handle 16, the steering shaft 24, and the front fork 26 realize a steering member that changes a travel direction of the front wheel 14F.

The main frame 122 is arranged behind the head pipe 121 and extends in the front-rear direction. A front end of the main frame 122 is connected to the head pipe 121. A rear end of the main frame 122 is connected to a bracket (not illustrated) which supports the drive unit 20.

The seat frame 124 is arranged behind the main frame 122. The seat frame 124 is connected to the bracket (not illustrated) which supports the drive unit 20 and extends in the up-down direction. The battery unit 22 is attached to the seat frame 124. The battery unit 22 supplies power to the drive unit 20. The battery unit 22 includes a battery 221 as a power storage device and a control unit (not illustrated). The battery 221 is a rechargeable battery that is capable of charging and discharging. The control unit controls charging and discharging of the battery 221 and monitors an output current, a remaining amount, or the like of the battery 221.

A seat pipe 28 is inserted in the seat frame 124. The saddle 18 is attached to an upper end of the seat pipe 28. That is, the saddle 18 is supported by the vehicle body frame 12 via the seat pipe 28.

Each of the pair of chain frames 125, 125 extends in the front-rear direction. The pair of chain frames 125, 125 is arranged side by side along the left-right direction. The rear wheel 14R is arranged between the pair of chain frames 125, 125. The pair of chain frames 125, 125 is arranged left-right symmetrical. Therefore, in FIG. 1, only the left-side chain frame 125 is illustrated.

A front-end part of each of the chain frames 125 is attached to the bracket (not illustrated) which supports the drive unit 20. That is, each of the chain frames 125 extends backwardly from the seat frame 124.

An axle of the rear wheel 14R is rotatably attached to a rear end part of each of the chain frames 125. That is, the axle of the rear wheel 14R is rotatably supported by the pair of chain frames 125, 125. In short, the rear wheel 14R is supported by the vehicle body frame 12. A driven sprocket is fixed to the axle of the rear wheel 14R.

Each of the pair of seat frames 126, 126 extends in the front-rear direction. The pair of seat frames 126, 126 is arranged side by side along the left-right direction. The rear wheel 14R is arranged between the pair of seat frames 126, 126. The pair of seat frames 126, 126 is arranged left-right symmetrical. Therefore, in FIG. 1, only the left-side seat frame 126 is illustrated.

A front-end part of the left-side seat frame 126 is connected to the seat frame 124. A front-end part of the right-side seat frame 126 is connected to the seat frame 124.

A rear end part of the left-side seat frame 126 is connected to a rear end part of the left-side chain frame 125. A rear end part of the right-side seat frame 126 is connected to a rear end part of the right-side chain frame 125.

The drive unit 20 includes a motor. The motor generates a driving force that assists a pedal stepping force of a rider.

The drive unit 20 includes a crankshaft 201. A crankarm is attached to each of both of end parts of the crankshaft 201 in an axial direction thereof. A pedal is attached to the crankarm.

A driving sprocket is attached to the crankshaft 201. A chain is wound around the driving sprocket and the driven sprocket.

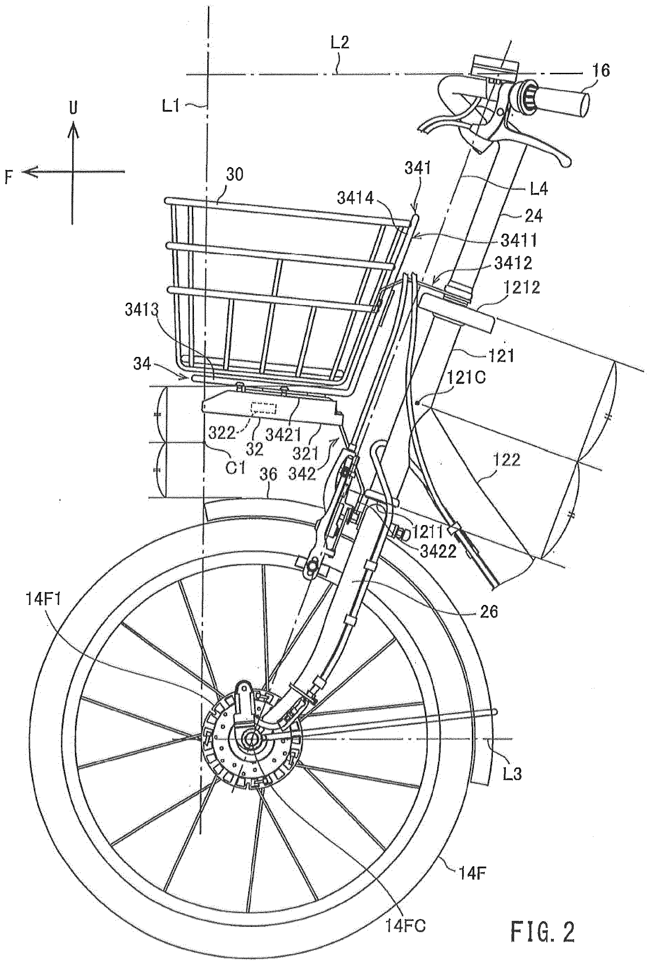

The electric power-assisted bicycle 10 further includes a front basket 30 and a power reception device 32. These members will be described below with reference to FIG. 2. FIG. 2 is a left side view illustrating an enlarged front part of the electric power-assisted bicycle 10.

The front basket 30 opens upwardly. The front basket 30 is configured such that goods can be put out and in from an upper side. A length of the front basket 30 in the left-right direction is shorter than a length of the handle 16 in the left-right direction.

The front basket 30 is attached to the steering shaft 24 and the front fork 26 via a bracket 34. Specifically, the bracket 34 is configured in a manner described below.

The bracket 34 includes an upper bracket 341 and a lower bracket 342. The upper bracket 341 includes a front bracket 3411 and a rear bracket 3412.

The front bracket 3411 extends in the front-rear direction and the up-down direction. The front bracket 3411 includes a front part 3413 and a rear part 3414.

The front part 3413 is located under the front basket 30. The front part 3413 is attached to a bottom part of the front basket 30.

The rear part 3414 is located behind the front basket 30. The rear part 3414 extends backwardly and also upwardly from a rear end of the front part 3413. The rear part 3414 is fixed to the steering shaft 24 via the rear bracket 3412.

The lower bracket 342 extends in the front-rear direction and the up-down direction. The lower bracket 342 includes a front part 3421 and a rear part 3422.

The front part 3421 is located under the front part 3413 included in the upper bracket 341. The front part 3421 is fixed to the front part 3413. As a method for fixing the front part 3421 to the front part 3413, for example, welding, screwing, or the like is used.

The rear part 3422 is located backward and below the front part 3421. The rear part 3422 is fixed to the front fork 26.

As described above, the upper bracket 341 (specifically, the rear bracket 3412) is fixed to the steering shaft 24 and the lower bracket 342 is fixed to the front fork 26. The steering shaft 24 and the front fender 36 move in accordance with an operation of the handle 16. That is, the bracket 34 moves with the handle 16. In short, the front basket 30 moves with the handle 16.

The power reception device 32 is arranged under the front basket 30. In an example illustrated in FIG. 2, the power reception device 32 is located between the front basket 30 and the front fender 36. When viewed from the up-down direction, the power reception device 32 is arranged in a position that overlaps each of the front basket 30 and the front fender 36.

The power reception device 32 is screwed on the front part 3413 of the upper bracket 341 and the front part 3421 of the lower bracket 342. That is, the power reception device 32 moves with the handle 16.

The power reception device 32 includes a housing 321 and a power reception coil 322. The power reception coil 322 is stored in the housing 321.

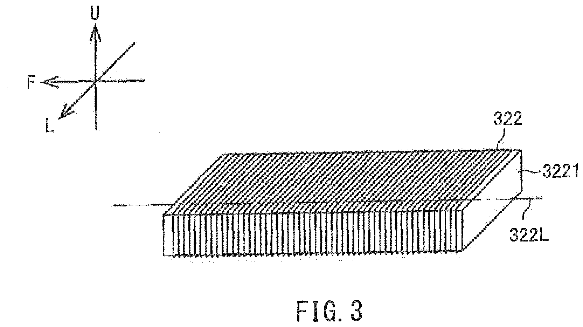

With reference to FIG. 3, the power reception coil 322 will be described. FIG. 3 is a perspective view illustrating the power reception coil 322.

The power reception coil 322 is wound around a core 3221. The core 3221 has a rectangular parallelepiped shape, that is, a thick rectangular plate shape. The core 3221 is formed of a magnetic material. The magnetic material is, for example, iron.

The power reception coil 322 includes an axial line 322L. The axial line 322L extends in the front-rear direction. The axial line 322L passes through a center of the core 3221. The axial line 322L extends in parallel to each of an upper surface, a lower surface, a left-side surface, and a right-side surface of the core 3221. The axial line 322L perpendicularly intersects with each of a front side surface and a rear side surface of the core 3221.

With reference to FIG. 2, the power reception coil 322 will be described. The power reception coil 322 is located forward relative to the head pipe 121. The power reception coil 322 is located above a lower end 1211 of the head pipe 121. The power reception coil 322 is located below an upper end 1212 of the head pipe 121. That is, the power reception coil 322 is located below the handle 16. Note that, in the example illustrated in FIG. 2, the power reception coil 322 is located below an intermediate point 121C in a length direction (the axial direction) of the head pipe 121.

The power reception coil 322 is located under the front basket 30. The power reception coil 322 is located above the front fender 36. That is, the power reception coil 322 is located between the front basket 30 and the front fender 36.

In the example illustrated in FIG. 2, the power reception coil 322 is located above an intermediate point C1. In this case, the intermediate point C1 is an intermediate point of a distance from a lower end of the front basket 30 to an upper end of the front fender 36. That is, the power reception coil 322 is located closer to the front basket 30 than the intermediate point C1 is in the up-down direction.

The power reception coil 322 is located backward relative to a front end of the front basket 30. The power reception coil 322 is located backward relative to a front end of the front fender 36. The power reception coil 322 is located backward relative to a front end of a hub 14F1 included in the front wheel 14F.

The power reception coil 322 is located substantially immediately above an axial center 14FC of the hub 14F1. That is, the power reception coil 322 is located in substantially the same position as that of the axial center 14FC in the front-rear direction.

As illustrated in FIG. 2, four straight lines L1, L2, L3, and L4 are set. The straight line L1 is in contact with a front end of the hub 14F1 and extends in the up-down direction, when viewed from a side surface of the vehicle. The straight line L2 extends in a direction that perpendicularly intersects with the straight line L1 and is in contact with an upper end of the handle 16, when viewed from the side surface of the vehicle. The straight line L3 extends in a direction that perpendicularly intersects with the straight line L1 and passes through the axial center 14FC of the hub 14F1, when viewed from the side surface of the vehicle. The straight line L4 extends in parallel to the head pipe 121 and passes through the axial center 14FC, when viewed from the side surface of the vehicle. The power reception coil 322 is arranged in an area surrounded by the four straight lines L1, L2, L3, and L4.

With reference to FIG. 1, the power reception coil 322 will be described. The power reception coil 322 is located forward relative to the drive unit 20. That is, the power reception coil 322 is located forward relative to the crankshaft 201.

In this case, the drive unit 20 is located forward relative to the rear wheel 14R. That is, the power reception coil 322 is located in an opposite side to the rear wheel 14R with respect to the drive unit 20 in the front-rear direction.

The power reception coil 322 is located above the drive unit 20. That is, the power reception coil 322 is located above the crankshaft 201.

In this case, the drive unit 20 is located below the lower end 1211 of the head pipe 121. As described above, the power reception coil 322 is located above the lower end 1211 of the head pipe 121. That is, the power reception coil 322 is located on an opposite side to the drive unit 20 with respect to the lower end 1211 of the head pipe 121 in the up-down direction.

The power reception coil 322 is located forward relative to the head pipe 121. In this case, the drive unit 20 is located backward relative to the head pipe 12. That is, the power reception coil 322 is located on an opposite side to the drive unit 20 with respect to the head pipe 12 in the front-rear direction.

The power reception coil 322 is located forward relative to the saddle 18. That power reception coil 322 is located below the saddle 18.

The power reception coil 322 is located forward relative to the battery unit 22. The power reception coil 322 is located forward relative to the seat frame 124. In this case, the battery unit 22 is located backward relative to the seat frame 124. That is, the power reception coil 322 is located on an opposite side to the battery unit 22 with respect to the seat frame 124 in the front-rear direction.

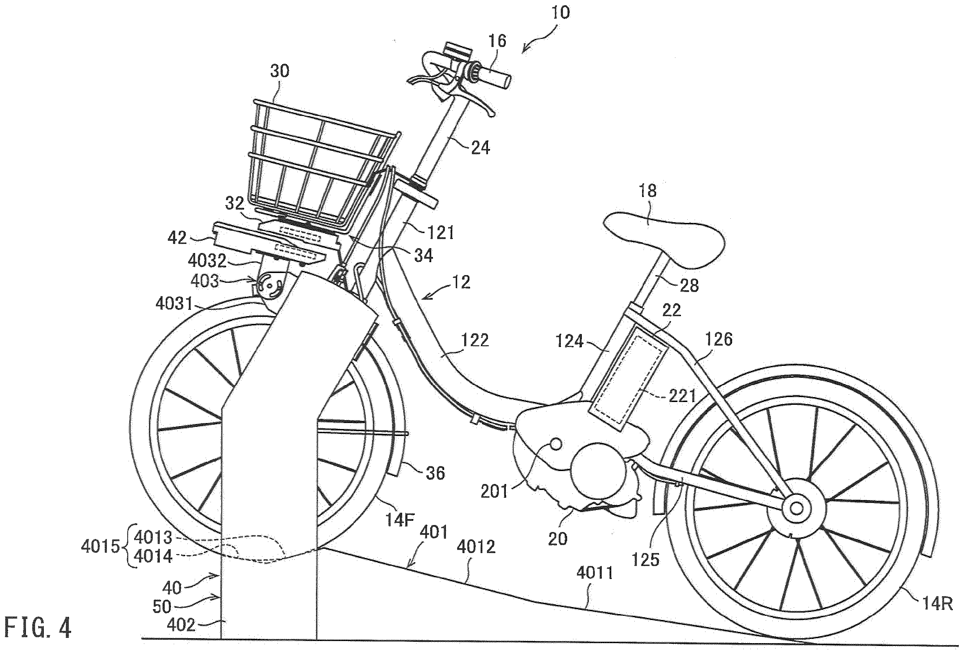

As illustrated in FIG. 4, the electric power-assisted bicycle 10 is parked in a parking equipment 40 installed in vicinity of a station or the like. The parking equipment 40 includes a power transmission device 42. In a state in which the electric power-assisted bicycle 10 is parked in the parking equipment 40, power transmission from the power transmission device 42 to the power reception device 32 is performed. Thus, a battery 221 can be charged. That is, a charging system 50 that includes the power reception device 32 and the power transmission device 42 and charges the battery 221 is realized.

With reference to FIG. 4, the parking equipment 40 will be described. FIG. 4 is a left side view illustrating a state in which the electric power-assisted bicycle 10 is parked in the parking equipment 40.

The parking equipment 40 includes a guide passage 401. The guide passage 401 guides the front wheel 14F of the electric power-assisted bicycle 10 to a predetermined position.

The guide passage 401 includes a slope 4011, a slope 4012, a slope 4013, and a slope 4014. These slopes will be described below.

The slope 4011 extends in the front-rear direction. A front end of the slope 4011 is located above a rear end of the slope 4011. The rear end of the slope 4011 is substantially at the same position as that of a road surface in the up-down direction.

The slope 4012 extends in the front-rear direction. A front end of the slope 4012 is located above a rear end of the slope 4012. The rear end of the slope 4012 is connected to the front end of the slope 4011. An inclination angle (an inclination angle with respect to the road surface) of the slope 4012 is larger than an inclination angle of the slope 4011.

The slope 4013 extends in the front-rear direction. A front end of the slope 4013 is located below a rear end of the slope 4013. The rear end of the slope 4013 is connected to the front end of the slope 4012. A length of the slope 4013 in the front-rear direction is smaller than a radius of the front wheel 14F.

The slope 4014 extends in the front-rear direction. A front end of the slope 4014 is located above a rear end of the slope 4014. The rear end of the slope 4014 is connected to the front end of the slope 4013. That is, the slope 4013 and the slope 4014 form a recess 4015. The front wheel 14F fits in the recess 4015, that is, the front wheel 14F is in contact with the slope 4013 and the slope 4014, and thereby, movement of the electric power-assisted bicycle 10 in the front-rear direction is restricted.

A length of the slope 4014 in the front-rear direction is smaller than the radius of the front wheel 14F. The length of the slope 4014 in the front-rear direction is smaller than the length of the slope 4013 in the front-rear direction. A length of the slope 4014 in the up-down direction is smaller than a length of the slope 4013 in the up-down direction.

The parking equipment 40 further includes a pair of left and right posts 402, 402. The left post 402 is arranged on a left side relative to the guide passage 401. The right post 402 is arranged on a right side relative to the guide passage 401. That is, the guide passage 401 is located between the pair of posts 402, 402 in the left-right direction. In an example illustrated in FIG. 4, the recess 4015 formed in a front part of the guide passage 401 is located between the pair of posts 402, 402 in the left-right direction. The pair of posts 402, 402 is arranged left-right symmetrical. Therefore, in FIG. 4, only the left post 402 is illustrated.

The parking equipment 40 further includes a bracket 403. The power transmission device 42 is attached to the pair of posts 402, 402 via the bracket 403.

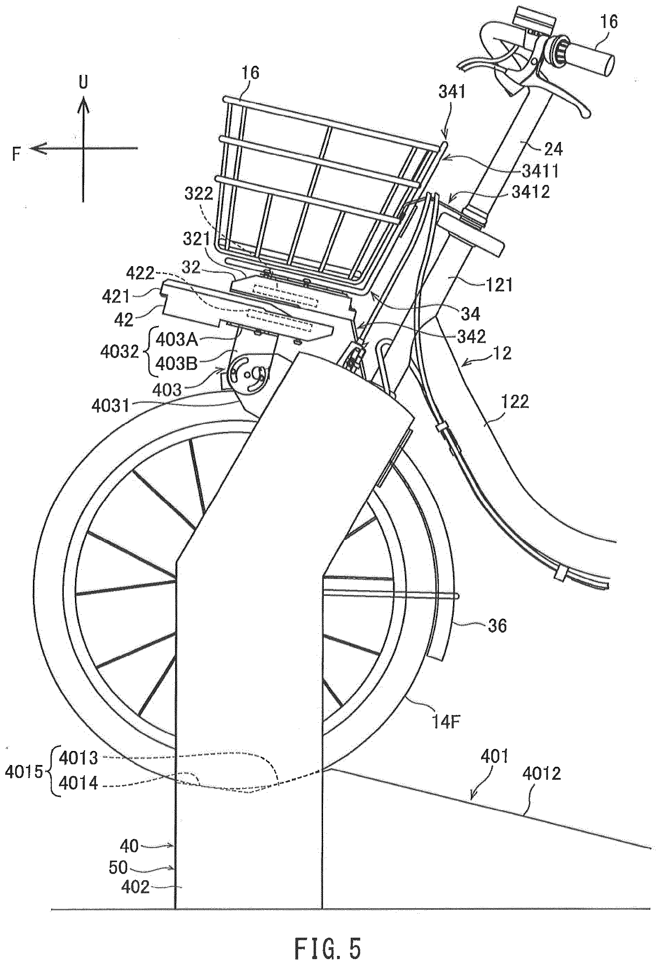

The bracket 403 includes a pair of left and right first brackets 4031, 4031 and a second bracket 4032. These brackets will be described below with reference to FIG. 5. FIG. 5 is a left-side view illustrating an enlarged part of FIG. 3.

The pair of first brackets 4031, 4031 is arranged left-right symmetrical. Therefore, in FIG. 5, only the left first bracket 4031 is illustrated.

The left first bracket 4031 is fixed to the left post 402. The right first bracket 4031 is fixed to the right post 402.

The second bracket 4032 includes a main body 403A and a pair of left and right legs 403B, 403B. These members will be described below.

The main body 403A has a plate shape. The main body 403A is attached to a lower surface of the power transmission device 42.

The pair of legs 403B, 403B is arranged left-right symmetrical. Therefore, in FIG. 5, only the left leg 403B is illustrated.

The left leg 403B is rotatably attached to the left first bracket 4031. The right leg 403B is rotatably attached to the right first bracket 4031. That is, the second bracket 4032 that supports the power transmission device 42 is rotatably attached to the pair of first brackets 4031, 4031. Thus, a mounting angle of the power transmission device 42 with respect to the pair of posts 402, 402 can be changed.

The power transmission device 42 includes a housing 421 and a power transmission coil 422. The power transmission coil 422 is stored in the housing 421.

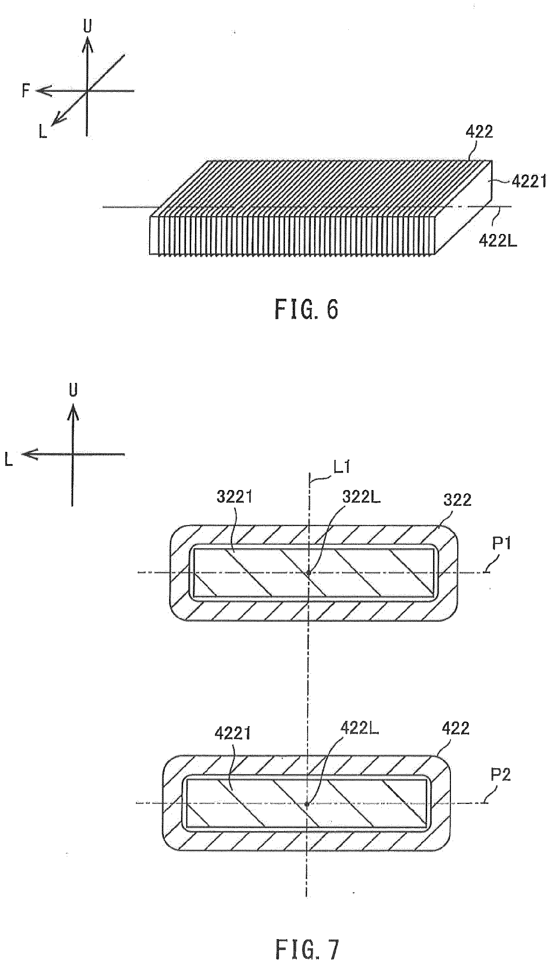

With reference to FIG. 6, the power transmission coil 422 will be described. FIG. 6 is a perspective view illustrating the power transmission coil 422.

The power transmission coil 422 is wound around a core 4221. The core 4221 has a rectangular parallelepiped shape, that is, a thick rectangular plate shape. The core 4221 is formed of a magnetic material. The magnetic material is, for example, iron.

The power transmission coil 422 includes an axial line 422L. The axial line 422L extends in the front-rear direction. The axial line 422L passes through a center of the core 4221. The axial line 422L extends in parallel to each of an upper surface, a lower surface, a left-side surface, and a right-side surface of the core 4221. The axial line 422L perpendicularly intersects with each of a front side surface and a rear side surface of the core 4221.

With reference to FIG. 7, a relationship between the power reception coil 322 and the power transmission coil 422 in a state in which the battery 221 of the electric power-assisted bicycle 10 is being charged will be described. FIG. 7 is a rear cross-sectional view illustrating a relationship between the power reception coil 322 and the power transmission coil 422 in a state in which the battery 221 of the electric power-assisted bicycle 10 is being charged.

In a state in which the battery 221 of the electric power-assisted bicycle 10 is being charged, the axial line 322L of the power reception coil 322 is in parallel to the axial line 422L of the power transmission coil 422. The axial line 322L of the power reception coil 322 is located on a plane P1. The axial line 422L of the power transmission coil 422 is located on a plane P2. In this case, a straight line L1 that perpendicularly intersects with each of the axial line 322L and the axial line 422L and passes through an intermediate point of a length of each of the power reception coil 322 and the power transmission coil 422 in an axial direction thereof is set. The plane P1 is a plane that includes the axial line 322L and is perpendicular to the straight line L1. The plane P2 is a plane that includes the axial line 422L and is perpendicular to the straight line L1. That is, the power reception coil 322 is wound around the axial line 322L that extends in parallel to the plane P2 on which the power transmission coil 422 is located.

In the electric power-assisted bicycle 10, power transmission from the power transmission coil 422 included in the power transmission device 42 to the power reception coil 322 included in the power reception device 32 is performed in a state in which the electric power-assisted bicycle 10 is parked in the parking equipment 40. Thus, it is possible to charge the battery 221.

In the electric power-assisted bicycle 10, the power reception coil 322 is a solenoidal type coil. If the power reception coil 322 is arranged considering a posture of the electric power-assisted bicycle 10 when being parked, it is possible to increase power transmission efficiency from the power transmission coil 422 to the power reception coil 322 without strictly managing the posture of the electric power-assisted bicycle 10 when being parked.

In this embodiment, because, when the electric power-assisted bicycle 10 is parked in the parking equipment 40, the front wheel 14F is in contact with the slope 4013 and the slope 4014 included in the guide passage 401, movement of the front wheel 14F in the front direction or in the rear direction is limited. Therefore, it is possible to suppress a shift of the power reception coil 322 with respect to the power transmission coil 422in the front direction or in the rear direction. Also, the front wheel 14F is in contact with the slope 4013 and the slope 4014, and thereby, turning of the front wheel 14F, that is, movement of the handle 16, is restricted. Therefore, it is possible to suppress a shift of the power reception coil 322 with respect to the power transmission coil 422 in a direction in which the handle 16 rotates.

Each of the axial line 322L of the power reception coil 322 and the axial line 422L of the power transmission coil 422 extends in the front-rear direction. Therefore, movement of the power reception coil 322 with respect to the power transmission coil 422 in the front direction or in the rear direction is suppressed, and thereby a positional shift of the power reception coil 322 with respect to the power transmission coil 422 in the axial direction is suppressed. Also, movement of the power reception coil 322 with respect to the power transmission coil 422 in a direction in which the handle 16 rotates is suppressed, and thereby, a positional shift in a direction (a twist direction) in which the power reception coil 322 rotates around the straight line L1 with respect to the power transmission coil 422 is suppressed.

In this embodiment, each of the power reception coil 322 and the power transmission coil 422 is a solenoid coil. In a solenoid coil, when a positional shift in an axial direction or a twist direction occurs, power transmission efficiency tends to reduce. In this embodiment, a direction in which a positional shift of the power reception coil 322 with respect to the power transmission coil 422 is suppressed matches a direction in which, when a positional shift occurs, power transmission efficiency tends to be reduced.

In a state in which the electric power-assisted bicycle 10 is parked in the parking equipment 40, there is a case in which the electric power-assisted bicycle 10 is slightly inclined in the left direction or in the right direction. In this case, although the power reception coil 322 moves in a circumferential direction around the axial line 422L of the power transmission coil 422, a parallel state to the power transmission coil 422 is maintained, and therefore, power transmission efficiency from the power transmission coil 422 to the power reception coil 322 is hardly reduced. That is, in this embodiment, a direction in which a positional shift of the power reception coil 322 with respect to the power transmission coil 422 tends to occur matches a direction in which, when a positional shift occurs, power transmission efficiency is hardly reduced.

Therefore, in this embodiment, it is possible to increase power transmission efficiency from the power transmission coil 422 to the power reception coil 322 without strictly managing a posture of the electric power-assisted bicycle 10 when being parked.

Note that, in a state in which the electric power-assisted bicycle 10 is parked in the parking equipment 40, inclination of the electric power-assisted bicycle 10 in the front direction or in the rear direction may be suppressed. For example, when the electric power-assisted bicycle 10 is inclined in the left direction or in the right direction, inclination of the electric power-assisted bicycle 10 in the left direction or in the right direction may be suppressed by arranging the housing 321 of the power reception device 32 in contact with the housing 421 of the power transmission device 42.

In the electric power-assisted bicycle 10, the power reception coil 322 is a solenoid coil. Therefore, with the same distance from a coil included in a power transmission device to a coil included in a power reception device, as compared to a circular type coil, the size of a coil itself may be suppressed. Therefore, for a mounting position of the electric power-assisted bicycle 10, the degree of freedom is increased. As a result, it is possible to arrange the power reception coil 322 in accordance with a position of the power transmission coil 422 included in the power transmission device 42.

In this embodiment, the power reception coil 322 is arranged between the front basket 30 and the front wheel 14F. Making good use of a space that is originally a dead space, it is possible to arrange the power reception coil 322.

In this embodiment, the power reception device 32 that includes the power reception coil 322 is arranged in front of the head pipe 121 included in the vehicle body frame 12. It is possible to easily park the electric power-assisted bicycle 10 while adjusting a positional relationship between the power reception device 32 and the power transmission device 42. That is, when the electric power-assisted bicycle 10 is parked, it is possible to put the positional relationship between the power reception coil 322 included in the power reception device 32 and the power transmission coil 422 included in the power transmission device 42 in an optimal state. Therefore, for example, as compared to a case in which a power reception device is arranged in a stand (a one-leg stand or a double-leg stand) provided to an electric power-assisted bicycle, positional adjustment of a coil included in a power reception device and a coil included in a power transmission device is simplified.

In the electric power-assisted bicycle 10, when the electric power-assisted bicycle 10 is parked in the parking equipment 40, the power reception device 32 is located above the power transmission device 42. Therefore, adjustment of position of the power reception device 32 with respect to the power transmission device 42 is simplified. That is, positional adjustment of the power reception coil 322 of the power reception device 32 with respect to the power transmission coil 422 of the power transmission device 42 is facilitated.

In the electric power-assisted bicycle 10, when the electric power-assisted bicycle 10 is parked in the parking equipment 40, the power reception device 32 is located above the power transmission device 42. Because positional adjustment of the power reception device 32 with respect to the power transmission device 42 is facilitated, when the electric power-assisted bicycle 10 is parked, turning back is not needed.

In the electric power-assisted bicycle 10, when the power supply device 10 is parked in the parking equipment 40, the power reception device 32 is located above the power transmission device 42. The power reception device 32 can be seen, and therefore, even when the power reception device 32 is made compact, positional adjustment of the power reception device 32 with respect to the power transmission device 42 is facilitated.

In the electric power-assisted bicycle 10, the power reception device 32 moves in accordance with an operation of the handle 16. The power reception coil 322 included in the power reception device 32 is a solenoid coil, and therefore, the size of the power reception coil 322 may be suppressed, as compared to a case in which the power reception coil 322 is a circular type coil. It is possible to arrange the power reception device 32 while maintaining operability of the handle 16.

In the electric power-assisted bicycle 10, the power reception coil 322 is stored in the housing 321. Therefore, for example, even when muddy water is splashed, a stone is bounced, or the like, while the vehicle is travelling, it is possible to prevent the muddy water, the stone, or the like from contacting the power reception coil 322.

In this embodiment, the housing 321 is arranged above the front wheel 14F and in front of the head pipe 121. Therefore, while the vehicle is traveling, muddy water, a stone, or the like are hardly splashed or bounced to the housing 321.

In this embodiment, the housing 321 is arranged above the front fender 36. Therefore, it is possible to prevent muddy water, a stone, or the like from splashing or bouncing to the housing 321 while the vehicle is traveling.

In the electric power-assisted bicycle 10, the power reception device 32 that is provided separately from the drive unit 20 includes the power reception coil 322. Therefore, for example, it is possible to suppress the size of the drive unit 20, as compared to a case in which a coil of a power reception device is provided in the drive unit 20. As a result, for example, it is possible to suppress reduction in distance (a lowest ground clearance) from the drive unit 20 to the ground.

In the electric power-assisted bicycle 10, the power reception device 32 that is provided separately from the vehicle body frame 12 includes the power reception coil 322. Therefore, for example, it is possible to ensure the degree of freedom in arranging a power reception coil, as compared to a case in which a power reception coil of a power reception device is provided in the vehicle body frame 12.

In the electric power-assisted bicycle 10, the power reception device 32 is arranged under the front basket 30. Therefore, for example, as compared to a case in which a power reception device is arranged at the front fork 26, the power reception device 32 is hardly broken by an impact when the electric power-assisted bicycle 10 falls down.

In this embodiment, it is possible to adjust the position of the power transmission device 42. Therefore, it is not needed to provide, in the power supply device 10, a mechanism that is used for causing the power reception device 32 to be closer to the power transmission device 42 in a state in which the electric power-assisted bicycle 10 is parked in the parking equipment 40.

Note that, although, in this embodiment, as described above, it is possible to adjust the position of the power transmission device 42, the power transmission device 42 may be provided such that the position thereof is not adjustable.

### [Application Example of Power Transmission Coil]

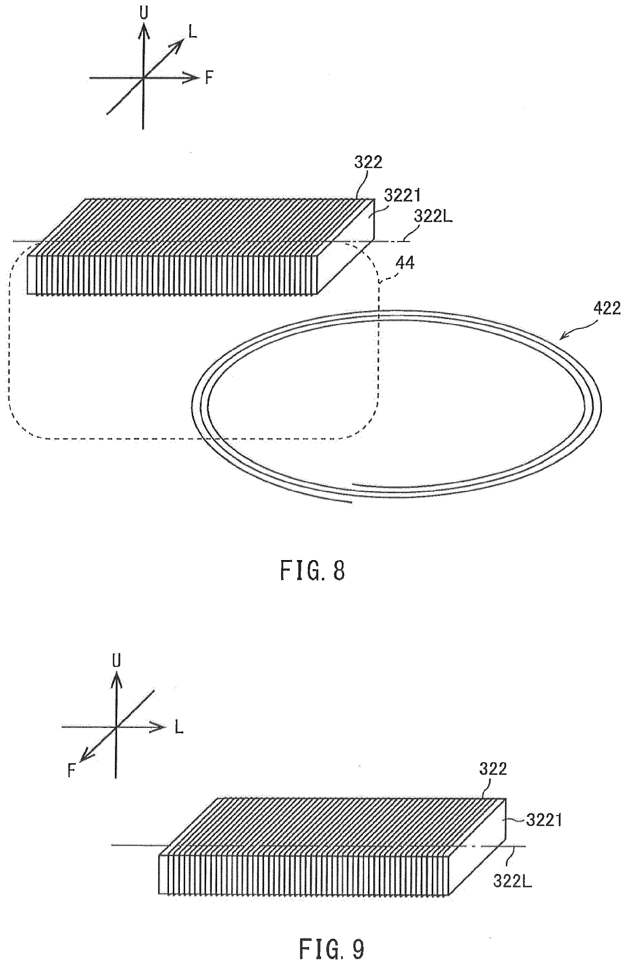

Although, in the above-described embodiment, the power transmission coil 422 is a solenoid coil, for example, as illustrated in FIG. 8, the power transmission coil 422 may be a circular type coil. In this case, the axial line 322L of the power reception coil 322 may extend in parallel to a plane (a plane including the power transmission coil 422) on which the power transmission coil 422 is located. In an example illustrated in FIG. 8, a magnetic flux 44 that is generated by electrical conduction to the power transmission coil 422 passes in the power reception coil 322, and thereby, it is possible to perform power transmission from the power transmission coil 422 to the power reception coil 322.

### [Application Example of Power reception coil]

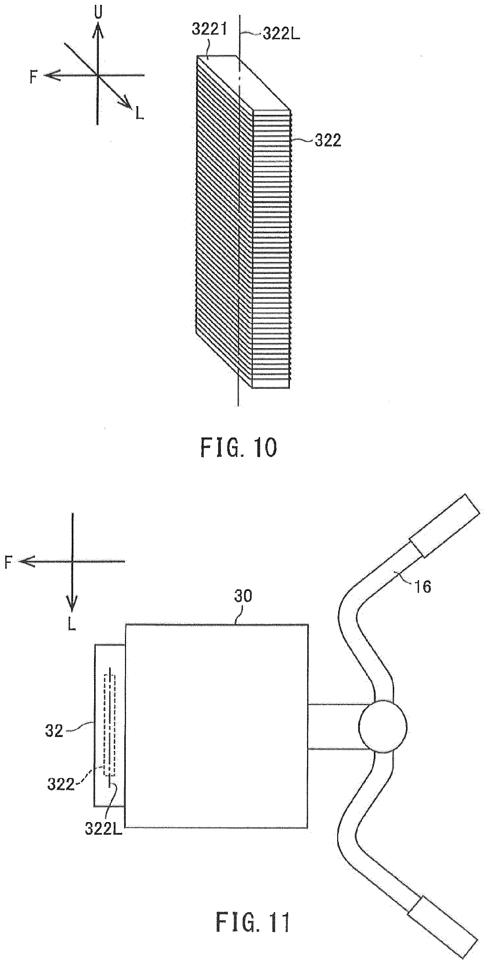

Although, in the above-described embodiment, the axial line 322L of the power reception coil 322 included in the power reception device 32 extends in the front-rear direction, the axial line 322L of the power reception coil 322 may not extend in the front-rear direction. The direction in which the axial line 322L of the power reception coil 322 is appropriately set in consideration of a posture of an electric power-assisted bicycle when being parked. For example, the direction in which the axial line 322L of the power reception coil 322 extends may be the left-right direction, as illustrated in FIG. 9, and may be the up-down direction, as illustrated in FIG. 10.

As illustrated in FIG. 9, when the axial line 322L of the power reception coil 322 extends in the left-right direction, for example, the power reception coil 322 may be arranged in front of the front basket 30 and also may be arranged under the front basket 30. FIG. 11 illustrates an example in which the power reception coil 322 the axial line 322L of which extends in the left-right direction is arranged in front of the front basket 30. Note that, although not illustrated, in the example illustrated in FIG. 11, when power transmission from a power transmission coil to the power reception coil 322 is performed, the power transmission coil is located in front of the power reception coil 322. When the power transmission coil is a solenoid coil, the axial line 322L of the power reception coil 322 extends in parallel to an axial line of the power transmission coil. When the power transmission coil is a circular type coil, the axial line 322L of the power reception coil 322 extends in parallel to a plane on which the power transmission coil is located.

As illustrated in FIG. 10, when the axial line 322L of the power reception coil 322 extends in the up-down direction, for example, the power reception coil 322 may be arranged in front of the front basket 30 and also may be arranged on a side of the front basket 30. Note that, when the power reception coil 322 is arranged on a side surface of the front basket 30, it is preferable to arrange the power reception coil 322 on each of left and right side surfaces. Thus, it is possible to increase a weight balance in the left-right direction.

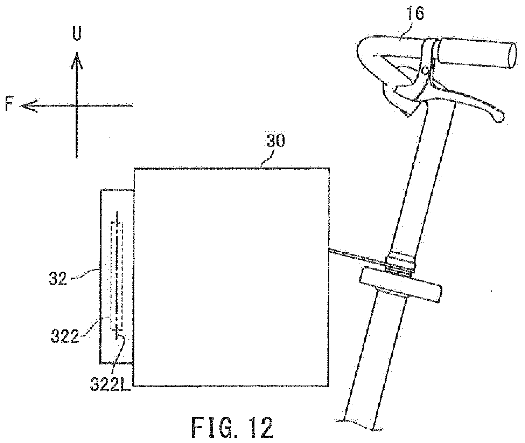

FIG. 12 is a view illustrating an example in which the power reception coil 322 the axial line 322L of which extends in the up-down direction is arranged in front of the front basket 30. Note that, although not illustrated, in the example illustrated in FIG. 12, when power transmission from a power transmission coil to the power reception coil 322 is performed, the power transmission coil is located in front of the power reception coil 322. When the power transmission coil is a solenoid coil, the axial line 322L of the power reception coil 322 extends in parallel to an axial line of the power transmission coil. When the power transmission coil is a circular type coil, the axial line 322L of the power reception coil 322 extends in parallel to a plane on which the power transmission coil is located.

In the examples illustrated in FIG. 9 and FIG. 10, even when, in a state in which the electric power-assisted bicycle is parked in a parking equipment, the power reception coil 322 moves around an axial line of a solenoid power transmission coil, power transmission efficiency from the power transmission coil to the power reception coil 322 is hardly reduced. Therefore, if, in a state in which the electric power-assisted bicycle is parked in a parking equipment, it is possible to suppress movement of the power reception coil 322 with respect to the power transmission coil in the axial direction and the twist direction, reduction in power transmission efficiency from the power transmission coil to the power reception coil 322 may be suppressed.

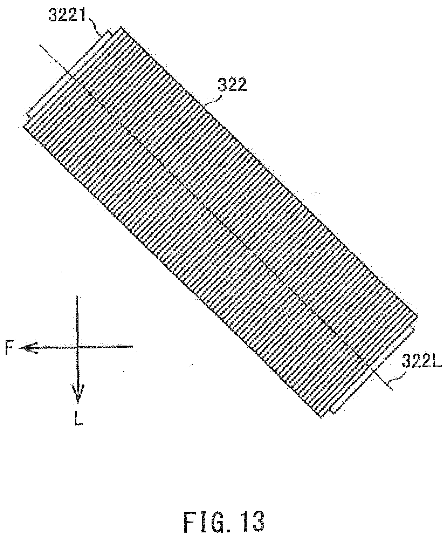

The direction in which the axial line 322L of the power reception coil 322 is not limited to any one of the front-rear direction, the up-down direction, and the left-right direction. For example, as illustrated in FIG. 13, the axial line 322L of the power reception coil 322 may extend in each of the front-rear direction and the left-right direction in a plane perpendicular to the up-down direction. Note that, although not illustrated, in an example illustrated in FIG. 13, when power transmission from a power transmission coil to the power reception coil 322 is performed, the power transmission coil is located under the power reception coil 322. When the power transmission coil is a solenoid coil, the axial line 322L of the power reception coil 322 extends in parallel to an axial line of the power transmission coil. When the power transmission coil is a circular type coil, the axial line 322L of the power reception coil 322 extends in parallel to a plane on which the power transmission coil is located.

In the example illustrated in FIG. 13, even when, in a state in which the electric power-assisted bicycle is parked in a parking equipment, the power reception coil 322 moves around an axial line of a solenoid power transmission coil, power transmission efficiency from the power transmission coil to the power reception coil 322 is hardly reduced. Therefore, if, in a state in which the electric power-assisted bicycle is parked in a parking equipment, it is possible to suppress movement of the power reception coil 322 with respect to the power transmission coil in the axial direction or the twist direction, reduction in power transmission efficiency from the power transmission coil to the power reception coil 322 may be suppressed.

In the example illustrated in FIG. 13, when viewed from the up-down direction, a length of the power reception coil 322 in the left-right direction may be suppressed. Therefore, the size of the power reception device may be suppressed.

An embodiment of the present teaching has been described above, but the above-described embodiment is merely an illustrative example of a preferred embodiment of the present teaching.

In the above-described embodiment, as a straddled vehicle, an electric power-assisted bicycle has been described as an example, but the straddled vehicle is not limited to an electric power-assisted bicycle. As long as a straddled vehicle uses a driving force generated by a motor, the straddled vehicle is not particularly limited. A straddled vehicle may be, for example, a motorcycle, a motor-tricycle, or an ATV. A straddled vehicle may be a scooter-type straddled vehicle.

## Claims

1. A system comprising a straddled vehicle (10) and a charging system (50) that charges a power storage device (221) included in the straddled vehicle (10), the straddled vehicle (10), comprising:
a front wheel (14F);
a rear wheel (14R) arranged more backward than the front wheel (14F);
a vehicle body frame (12) that supports the front wheel (14F) and the rear wheel (14R);
a saddle (18) supported by the vehicle body frame (12);
a power storage device (221) supported by the vehicle body frame (12); and
a power reception device (32) supported by the vehicle body frame (12) and connected to the power storage device (221),
wherein a rider rides on the straddled vehicle (10) in a state in which the rider straddles the saddle (18),
the power reception device (32) includes a solenoid power reception coil (322),
the solenoid power reception coil (322) is relatively-unmovably supported with respect to the vehicle body frame (12) of the straddled vehicle (10) in a state in which the straddled vehicle is parked,
a first axial line (322L) of the solenoid power reception coil (322) is located in a first plane (P1) and the solenoid power reception coil (322) is wound around the first axial line (322L) that passes through a center of a first core (3221) of the solenoid power reception coil (322),
a straight line (L1) is perpendicular to the first plane (PI), perpendicularly intersects the first axial line (322L) and passes through an intermediate point of a length of the power reception coil (322) in an axial direction, and
the charging system (50) comprising:
a power transmission coil (422) used for transmitting power to the solenoid power reception coil (322),
**characterized in that**
the solenoid power reception coil (322) is located forward relative to a head pipe (121) of the straddled vehicle (10), above a lower end (1211) of the head pipe (121) and below an upper end (1212) of the head pipe (121) such that,
in a state in which the straddled vehicle (10) is parked and power transmission from the power transmission coil (422) provided in a power transmission device (42) to the solenoid power reception coil (322) is performed,
the solenoid power reception coil (322) is located above the power transmission coil (422), and the first axial line (322L) extends in parallel to a second plane (P2) on which the power transmission coil (422) is located,
and the straight line (L1) perpendicularly intersects with the second plane (P2) and with a second axial line (422L) passing through a center of a second core (4221) around which the power transmission coil (422) is wound, and passes through an intermediate point of a length of the power transmission coil (422) in an axial direction, and
the first core (3221) of the solenoid power reception coil (322) has a thick rectangular plate shape and is formed of a magnetic material.

2. The system (50) according to claim 1,
wherein the first axial line (322L) of the solenoid power reception coil (322) extends in one of a left-right direction, a front-rear direction, and an up-down direction of the straddled vehicle (10).

3. The system (50) according to claim 1,
wherein the first plane (P1) is perpendicular to a left-right direction of the straddled vehicle (10).

4. The system (50) according to claim 3,
wherein the first axial line (322L) of the solenoid power reception coil (322) extends in a front-rear direction of the straddled vehicle (10).

5. The system (50) according to claim 3,
wherein the first axial line (322L) of the solenoid power reception coil (322) extends in an up-down direction of the straddled vehicle (10).

6. The system (50) according to any one of claims 1 to 5,
wherein the solenoid power reception coil (322) is supported by the vehicle body frame (12) of the straddled vehicle (10) such that, in a state in which the straddled vehicle (10) is parked and power transmission from the power transmission coil (422) to the solenoid power reception coil (322) is performed, the first axial line (322L) of the solenoid power reception coil (322) is in parallel to the second axial line (422L) of the power transmission coil (422) that is a solenoid coil.

7. The system (50) according to any one of claims 1 to 6, wherein the straddled vehicle further comprising:
a steering member (16, 24, 26) that steers the front wheel (14F),
wherein the solenoid power reception coil (322) is supported by the steering member (16, 24, 26).

8. The system (50) according to any one of claims 1 to 7, wherein the straddled vehicle further comprising:
a handle (16); and
a steering shaft (24) that supports the handle (16),
wherein the vehicle body frame (12) includes the head pipe (121) in which the steering shaft (24) is inserted,
a first straight line (L1) is in contact with a front end of a hub (14F1) included in the front wheel (14F) and extends in an up-down direction of the straddled vehicle (10), when viewed from a side surface of the straddled vehicle (10),
a second straight line (L2) extends in a direction that perpendicularly intersects with the first straight line (L1) and is in contact with an upper end of the handle (16), when viewed from the side surface of the straddled vehicle (10),
a third straight line (L3) extends in a direction that perpendicularly intersects with the first straight line (L1) and passes through an axial center of the hub (14F1), when viewed from the side surface of the straddled vehicle (10), and
a fourth straight line (L4) extends in parallel to the head pipe (121) and passes through the axial center of the hub (14F1), when viewed from the side surface of the straddled vehicle (10), , and
the solenoid power reception coil (322) is arranged in an area defined by the first straight line (L1), the second straight line (L2), the third straight line (L3), and the fourth straight line (L4).

9. The system (50) according to any one of claims 1 to 8, wherein the straddled vehicle further comprising:
a basket (30) arranged above the front wheel (14F),
wherein the solenoid power reception coil (322) is arranged between the front wheel (14F) and the basket.

## Patentansprüche

1. Ein System, das ein rittlings zu fahrendes Fahrzeug (10) und ein Ladesystem (50) aufweist, das eine Leistungsspeichervorrichtung (221), die in dem rittlings zu fahrenden Fahrzeug (10) enthalten ist, lädt, wobei das rittlings zu fahrende Fahrzeug (10) folgende Merkmale aufweist:
ein Vorderrad (14F);
ein Hinterrad (14R), das weiter hinten angeordnet ist als das Vorderrad (14F);
einen Fahrzeugkarosserierahmen (12), der das Vorderrad (14F) und das Hinterrad (14R) trägt;
einen durch den Fahrzeugkarosserierahmen (12) getragenen Sattel (18);
eine durch den Fahrzeugkarosserierahmen (12) getragene Leistungsspeichervorrichtung (221); und
eine durch den Fahrzeugkarosserierahmen (12) getragene und mit der Leistungsspeichervorrichtung (221) verbundene Leistungsempfangsvorrichtung (32),
wobei ein Fahrer in einem Zustand, in dem der Fahrer rittlings auf dem Sattel (18) sitzt, auf dem rittlings zu fahrenden Fahrzeug (10) fährt,
die Leistungsempfangsvorrichtung (32) eine Solenoidleistungsempfangsspule (322) umfasst,
die Solenoidleistungsempfangsspule (322) bezüglich des Fahrzeugkarosserierahmens (12) des rittlings zu fahrenden Fahrzeugs (10) in einem Zustand, in dem das rittlings zu fahrende Fahrzeug geparkt ist, relativ unbeweglich getragen wird,
sich eine erste axiale Linie (322L) der Solenoidleistungsempfangsspule (322) in einer ersten Ebene (P1) befindet und die Solenoidleistungsempfangsspule (322) um die erste axiale Linie (322L) gewickelt ist, die durch eine Mitte eines ersten Kerns (3221) der Solenoidleistungsempfangsspule (322) verläuft,
eine gerade Linie (L1) senkrecht zu der ersten Ebene (P1) ist, die erste axiale Linie (322L) senkrecht schneidet und durch einen dazwischen gelegenen Punkt einer Länge der Leistungsempfangsspule (322) in einer axialen Richtung verläuft, und
das Ladesystem (50) folgende Merkmale aufweist:
eine Leistungsübertragungsspule (422), die zum Übertragen von Leistung auf die Solenoidleistungsempfangsspule (322) verwendet wird,
**dadurch gekennzeichnet, dass**
sich die Solenoidleistungsempfangsspule (322) relativ zu der Hauptleitung (121) des rittlings zu fahrenden Fahrzeugs (10) weiter vorne befindet, über einem unteren Ende (1211) der Hauptleitung (121) und unter einem oberen Ende (1212) der Hauptleitung (121), so dass
in einem Zustand, in dem das rittlings zu fahrende Fahrzeug (10) geparkt ist und Leistungsübertragung von der Leistungsübertragungsspule (422), die in einer Leistungsübertragungsvorrichtung (42) vorgesehen ist, auf die Solenoidleistungsempfangsspule (322) durchgeführt wird,
sich die Solenoidleistungsempfangsspule (322) über der Leistungsübertragungsspule (422) befindet und sich die erste axiale Linie (322L) parallel zu einer zweiten Ebene (P2) erstreckt, auf der sich die Leistungsübertragungsspule (422) befindet,
und sich die gerade Linie (L1) senkrecht mit der zweiten Ebene (P2) und mit einer zweiten axialen Linie (422L) schneidet, die durch eine Mitte eines zweiten Kerns (4221) verläuft, um den die Leistungsübertragungsspule (422) gewickelt ist, und durch einen dazwischen gelegenen Punkt einer Länge der Leistungsübertragungsspule (422) in einer axialen Richtung verläuft, und der erste Kern (3221) der Solenoidleistungsempfangsspule (322) eine Form einer dicken rechteckigen Platte aufweist und aus einem magnetischen Material gebildet ist.

2. Das System (50) gemäß Anspruch 1,
bei dem sich die erste axiale Linie (322L) der Solenoidleistungsempfangsspule (322) entweder in einer Links-Rechts-Richtung oder einer Vorwärts-Rückwärts-Richtung oder einer Aufwärts-Abwärts-Richtung des rittlings zu fahrenden Fahrzeugs (10) erstreckt.

3. Das System (50) gemäß Anspruch 1,
bei dem die erste Ebene (P1) senkrecht zu einer Links-Rechts-Richtung des rittlings zu fahrenden Fahrzeugs (10) ist.

4. Das System (50) gemäß Anspruch 3,
bei dem sich die erste axiale Linie (322L) der Solenoidleistungsempfangsspule (322) in einer Vorwärts-Rückwärts-Richtung des rittlings zu fahrenden Fahrzeugs (10) erstreckt.

5. Das System (50) gemäß Anspruch 3,
bei dem sich die erste axiale Linie (322L) der Solenoidleistungsempfangsspule (322) in einer Aufwärts-Abwärts-Richtung des rittlings zu fahrenden Fahrzeugs (10) erstreckt.

6. Das System (50) gemäß einem der Ansprüche 1 bis 5,
bei dem die Solenoidleistungsempfangsspule (322) derart durch den Fahrzeugkarosserierahmen (12) des rittlings zu fahrenden Fahrzeugs (10) getragen wird, dass in einem Zustand, in dem das rittlings zu fahrende Fahrzeug (10) geparkt ist und eine Leistungsübertragung von der Leistungsübertragungsspule (422) auf die Solenoidleistungsempfangsspule (322) durchgeführt wird, die erste axiale Linie (322L) der Solenoidleistungsempfangsspule (322) parallel zu der zweiten axialen Linie (422L) der Leistungsübertragungsspule (422) ist, die eine Solenoidspule ist.

7. Das System (50) gemäß einem der Ansprüche 1 bis 6, bei dem das rittlings zu fahrende Fahrzeug ferner folgende Merkmale aufweist:
ein Lenkbauglied (16, 24, 26), das das Vorderrad (14F) lenkt,
wobei die Solenoidleistungsempfangsspule (322) durch das Lenkbauglied (16, 24, 26) getragen wird.

8. Das System (50) gemäß einem der Ansprüche 1 bis 7, bei dem das rittlings zu fahrende Fahrzeug ferner folgende Merkmale aufweist:
einen Lenker (16); und
eine Lenkwelle (24), die den Lenker (16) trägt,
wobei der Fahrzeugkarosserierahmen (12) die Hauptleitung (121), in die die Lenkwelle (24) eingefügt ist, umfasst,
eine erste gerade Linie (L1) in Kontakt mit einem Vorderende einer in dem Vorderrad (14F) enthaltenen Nabe (14F1) steht und sich in einer Aufwärts-Abwärts-Richtung des rittlings zu fahrenden Fahrzeugs (10) erstreckt, von einer Seitenoberfläche des rittlings zu fahrenden Fahrzeugs (10) aus betrachtet,
sich eine zweite gerade Linie (L2) in einer Richtung erstreckt, die sich mit der ersten geraden Linie (L1) senkrecht schneidet, und mit einem oberen Ende des Lenkers (16) in Kontakt steht, von der Seitenoberfläche des rittlings zu fahrenden Fahrzeugs (10) aus betrachtet,
sich eine dritte gerade Linie (L3) in einer Richtung erstreckt, die sich mit der ersten geraden Linie (L1) senkrecht schneidet, und durch eine axiale Mitte der Nabe (14F1) verläuft, von der Seitenoberfläche des rittlings zu fahrenden Fahrzeugs (10) aus betrachtet, und
sich eine vierte gerade Linie (L4) parallel zu der Hauptleitung (121) erstreckt und durch die axiale Mitte der Nabe (14F1) verläuft, von der Seitenoberfläche des rittlings zu fahrenden Fahrzeugs (10) aus betrachtet, und
die Solenoidleistungsempfangsspule (322) in einem Bereich angeordnet ist, der durch die erste gerade Linie (L1), die zweite gerade Linie (L2), die dritte gerade Linie (L3) und die vierte gerade Linie (L4) definiert ist.

9. Das System (50) gemäß einem der Ansprüche 1 bis 8, bei dem das rittlings zu fahrende Fahrzeug ferner folgende Merkmale aufweist:
einen über dem Vorderrad (14F) angeordneten Korb (30),
wobei die Solenoidleistungsempfangsspule (322) zwischen dem Vorderrad (14F) und dem Korb angeordnet ist.

## Revendications

1. Système comprenant un véhicule à selle (10) et un système de chargement (50) qui charge un dispositif d'accumulation d'énergie (221) inclus dans le véhicule à selle (10), le véhicule à selle (10) comprenant:
une roue avant (14F);
une roue arrière (14R) disposée plus en arrière que la roue avant (14F);
un châssis de carrosserie de véhicule (12) qui supporte la roue avant (14F) et la roue arrière (14R);
une selle (18) supportée par le châssis de carrosserie de véhicule (12);
un dispositif d'accumulation d'énergie (221) supporté par le châssis de carrosserie de véhicule (12); et
un dispositif de réception d'énergie (32) supporté par le châssis de carrosserie de véhicule (12) et connecté au dispositif d'accumulation d'énergie (221),
dans lequel un motocycliste circule sur le véhicule à selle (10) dans un état dans lequel le motocycliste enjambe la selle (18),
le dispositif de réception d'énergie (32) comporte une bobine de réception d'énergie de solénoïde (322),
la bobine de réception d'énergie de solénoïde (322) est supportée de manière relativement immobile par rapport au châssis de carrosserie de véhicule (12) du véhicule à selle (10) dans un état dans lequel est stationné le véhicule à selle,
une première ligne axiale (322L) de la bobine de réception d'énergie de solénoïde (322) est située dans un premier plan (P1) et la bobine de réception d'énergie de solénoïde (322) est enroulée autour de la première ligne axiale (322L) qui passe par un centre d'un premier noyau (3221) de la bobine de réception d'énergie de solénoïde (322),
une ligne droite (L1) est perpendiculaire au premier plan (P1), vient perpendiculairement en intersection avec la première ligne axiale (322L) et passe par un point intermédiaire d'une longueur de la bobine de réception d'énergie (322) dans une direction axiale, et le système de chargement (50) comprenant:
une bobine de transmission d'énergie (422) utilisée pour transmettre de l'énergie à la bobine de réception d'énergie de solénoïde (322),
**caractérisé par le fait que**
la bobine de réception d'énergie de solénoïde (322) est située en avant par rapport à un tube de tête (121) du véhicule à selle (10), au-dessus d'une extrémité inférieure (1211) du tube de tête (121) et au-dessous d'une extrémité supérieure (1212) du tube de tête (121) de sorte que
dans un état dans lequel est stationné le véhicule à selle (10) et est effectuée la transmission d'énergie de la bobine de transmission d'énergie (422) prévue dans un dispositif de transmission d'énergie (42) à la bobine de réception d'énergie de solénoïde (322),
la bobine de réception d'énergie de solénoïde (322) est située au-dessus de la bobine de transmission d'énergie (422),
et la première ligne axiale (322L) s'étend en parallèle avec un deuxième plan (P2) sur lequel est située la bobine de transmission d'énergie (422),
et la ligne droite (L1) vient perpendiculairement en intersection avec le deuxième plan (P2) et avec une deuxième ligne axiale (422L) passant par un centre d'un deuxième noyau (4221) autour duquel est enroulée la bobine de transmission d'énergie (422), et passe par un point intermédiaire d'une longueur de la bobine de transmission d'énergie (422) dans une direction axiale, et
le premier noyau (3221) de la bobine de réception d'énergie de solénoïde (322) présente une forme de plaque rectangulaire épaisse et est formé en un matériau magnétique.

2. Système (50) selon la revendication 1,
dans lequel la première ligne axiale (322L) de la bobine de réception d'énergie de solénoïde (322) s'étend dans l'une parmi une direction gauche-droite, une direction avant-arrière et une direction de haut en bas du véhicule à selle (10).

3. Système (50) selon la revendication 1,
dans lequel le premier plan (P1) est perpendiculaire à une direction gauche-droite du véhicule à selle (10).

4. Système (50) selon la revendication 3,
dans lequel la première ligne axiale (322L) de la bobine de réception d'énergie de solénoïde (322) s'étend dans une direction avant-arrière du véhicule à selle (10).

5. Système (50) selon la revendication 3,
dans lequel la première ligne axiale (322L) de la bobine de réception d'énergie de solénoïde (322) s'étend dans une direction de haut en bas du véhicule à selle (10).

6. Système (50) selon l'une quelconque des revendications 1 à 5,
dans lequel la bobine de réception d'énergie de solénoïde (322) est supportée par le châssis de carrosserie de véhicule (12) du véhicule à selle (10) de sorte que, dans un état dans lequel est stationné le véhicule à selle (10) et est effectuée la transmission d'énergie de la bobine de transmission d'énergie (422) à la bobine de réception d'énergie de solénoïde (322), la première ligne axiale (322L) de la bobine de réception d'énergie de solénoïde (322) est parallèle à la deuxième ligne axiale (422L) de la bobine de transmission d'énergie (422) qui est une bobine de solénoïde.

7. Système (50) selon l'une quelconque des revendications 1 à 6, dans lequel le véhicule à selle comprend par ailleurs:
un élément de direction (16, 24, 26) qui dirige la roue avant (14F),
dans lequel la bobine de réception d'énergie de solénoïde (322) est supportée par l'élément de direction (16, 24, 26).

8. Système (50) selon l'une quelconque des revendications 1 à 7, dans lequel le véhicule à selle comprend par ailleurs:
une poignée (16); et
un arbre de direction (24) qui supporte la poignée (16),
dans lequel le châssis de carrosserie de véhicule (12) comporte le tube de tête (121) dans lequel est introduit l'arbre de direction (24),
une première ligne droite (L1) est en contact avec une extrémité avant d'un moyeu (14F1) inclus dans la roue avant (14F) et s'étend dans une direction de haut en bas du véhicule à selle (10), lorsque vue depuis une surface latérale du véhicule à selle (10),
une deuxième ligne droite (L2) s'étend dans une direction qui vient perpendiculairement en intersection avec la première ligne droite (L1) et est en contact avec une extrémité supérieure de la poignée (16), lorsque vue depuis la surface latérale du véhicule à selle (10),
une troisième ligne droite (L3) s'étend dans une direction qui vient perpendiculairement en intersection avec la première ligne droite (L1) et passe par un centre axial du moyeu (14F1), lorsque vue depuis la surface latérale du véhicule à selle (10), et
une quatrième ligne droite (L4) s'étend en parallèle avec le tube de tête (121) et passe par le centre axial du moyeu (14F1), lorsque vue depuis la surface latérale du véhicule à selle (10), et
la bobine de réception d'énergie de solénoïde (322) est disposée dans une zone définie par la première ligne droite (L1), la deuxième ligne droite (L2), la troisième ligne droite (L3) et la quatrième ligne droite (L4).

9. Système (50) selon l'une quelconque des revendications 1 à 8, dans lequel le véhicule à selle comprend par ailleurs:
un panier (30) disposé au-dessus de la roue avant (14F),
dans lequel la bobine de réception d'énergie de solénoïde (322) est disposée entre la roue avant (14F) et le panier.
